Europäisches Patentamt

European Patent Office

Office européen des brevets

(11) Numéro de publication: **0 273 812 B1**

(12) **FASCICULE DE BREVET EUROPEEN**

(45) Date de publication de fascicule du brevet: **05.08.92** (51) Int. Cl.⁵: **D02G 1/02, C03C 25/02**

(21) Numéro de dépôt: **87402744.4**

(22) Date de dépôt: **03.12.87**

(54) **Procédé et dispositif de fabrication d'un fil de verre simple obtenu directement sous filière.**

(30) Priorité: **04.12.86 FR 8616971**

(43) Date de publication de la demande:
**06.07.88 Bulletin 88/27**

(45) Mention de la délivrance du brevet:
**05.08.92 Bulletin 92/32**

(84) Etats contractants désignés:
**BE DE ES FR GB IT SE**

(56) Documents cités:
**EP-A- 0 022 552**
**FR-A- 1 455 241**
**FR-A- 2 184 075**
**FR-A- 2 277 913**

(73) Titulaire: **VETROTEX SAINT-GOBAIN**
**767 quai des Allobroges**
**F-73000 Chambéry(FR)**

(72) Inventeur: **Soszka, Barbara**
**32bis, avenue de Bassens**
**F-73000 Chambery(FR)**
Inventeur: **Fedorowsky, Robert**
**18, Montée des Griattes**
**F-73100 Aix-Les-Bains(FR)**
Inventeur: **Mahler, Jacques**
**3, rue Marc et Claude de Buttet**
**F-73000 Chambery(FR)**

(74) Mandataire: **Breton, Jean-Claude et al**
**SAINT-GOBAIN RECHERCHE 39, quai Lucien Lefranc**
**F-93300 Aubervilliers Cedex(FR)**

Rank Xerox (UK) Business Services

**Description**

La présente invention concerne un procédé de fabrication par étirage mécanique d'un fil de verre continu auquel on confère une simple torsion pendant son étirage. Dans l'industrie textile un tel fil s'appelle un fil simple.

L'invention concerne également les dispositifs de mise en oeuvre du procédé et les produits obtenus selon ledit procédé.

Les fils de verre continus doivent subir une torsion pour qu'ils puissent supporter plus facilement les différentes opérations textiles : guipage, tressage, tissage. Pour obtenir un tel fil avec la technique actuelle, il est nécessaire de procéder en trois étapes. La première consiste à réaliser un enroulement formé d'au moins un fil, constitué lui-même d'un grand nombre de fibres étirées mécaniquement à partir de filets de verre fondu. Généralement ces fibres sont revêtues d'un ensimage en solution aqueuse ; il est donc nécessaire, dans une deuxième étape, d'éliminer une partie de l'eau de l'enroulement par séchage ou par stockage. La troisième consiste à placer l'enroulement sur un metier à filer, à dérouler le fil puis à lui donner une simple torsion avant de le bobiner dans cet état sur un support approprié.

Ces opérations demandent du temps, de l'énergie, différents types de matériel, de la place pour les implanter. Les investissements qu'implique une telle fabrication sont particulièrement élevés et le coût du fil ainsi produit en est fortement augmenté. La simplification de ce procédé, en diminuant par exemple le nombre d'opérations pour arriver au produit désiré, présente donc un intérêt économique immédiat.

Dans la seule perspective des applications textiles, un procédé qui permettrait de réaliser en une seule étape la fabrication du fil et sa torsion constituerait déjà un progrès considérable. Mais le fait de donner une torsion au fil lui confère une plus grande intégrité, une meilleure cohésion des fibres qui le constituent, que celles d'un fil ordinaire. Cette qualité permet d'envisager d'autres applications pour lesquelles le fil simple pourra se présenter différement ; par exemple, sous forme de mat de fil continu ou à l'état de fil coupé.

L'invention décrite dans le brevet US-A-3 250 602 peut être considérée comme une tentative intéressante dans ce domaine. Le procédé divulgué par ce brevet consiste à étirer mécaniquement une multiplicité de fibres de verre à partir de filets de verre fondu s'écoulant d'une multiplicité d'orifices perforés à la base ou à la périphérie d'une filière rotative. Sous l'effet de la force centrifuge les fibres s'écartent, dès leur formation, de l'axe de rotation de la filière ; elles sont ensuite rassemblées au-dessous de la filière par une boucle d'assemblage. A cet endroit précis les fibres sont associées par une torsion provoquée par la rotation de la filière, et donnent directement naissance au fil simple.

Les fils de verre sont généralement fabriqués à partir de filières fixes alimentées à partir de verre froid, sous forme de billes par exemple, ou à partir de verre fondu émanant directement d'un four de fusion.

La mise en oeuvre du procédé précité demande une installation qui doit présenter des caractéristiques très particulières ; c'est le cas notamment pour la filière, qui doit supporter des vitesses de rotation très élevées sans pourtant se déformer trop rapidement. De surcroit, cette installation ne peut servir qu'à la fabrication de fil simple.

La présente invention a pour objet de réaliser en une seule étape la fabrication d'un fil de verre et sa torsion, à partir de fibres sensiblement cylindriques formées uniquement par étirage mécanique.

La présente invention a également pour objet une installation permettant d'effectuer cette fabrication à partir d'une filière fixe.

Le premier de ces buts est atteint grâce à un procédé qui consiste à étirer mécaniquement une multiplicité de fibres de verre à partir de filets de verre s'écoulant d'une multiplicité d'orifices disposés à la base d'une filière fixe, à revêtir au moins partiellement lesdites fibres d'un apprêt thermoplastique, thermodurcissable ou photodurcissable se présentant à l'état fondu ou sous forme d'émulsion, de suspension ou de solution dans des solvants appropriés, à rassembler lesdites fibres en au moins un fil, puis à imprimer un mouvement de rotation continue audit fil et à provoquer le durcissement de l'apprêt sur le fil simple ainsi obtenu.

Le mouvement de rotation imprimé au fil en cours d'étirage, afin de lui conférer une torsion déterminée, peut lui être donné pour tout moyen utilisé à cet effet dans l'industrie textile.

Ainsi la torsion du fil peut être obtenue grâce aux dispositifs qui opèrent par friction, mais également ceux qui utilisent l'action d'un flux gazeux, tel qu'un jet d'air tourbillonnant.

Selon la vitesse de rotation imprimée au fil et sa vitesse d'étirage, la torsion commence à apparaitre sur ledit fil à une distance plus ou moins grande de l'endroit où il prend naissance, c'est-à-dire là où les fibres sont rassemblées. Dans certaines conditions la contrainte de torsion peut atteindre les fibres encore séparées. Pour des raisons qui seront exposées ci-après, il peut même être intéressant que cette contrainte de torsion commence à apparaitre sur les fibres séparées légèrement en amont du niveau où elles sont revêtues d'apprêt.

L'apprêt utilisé dans le cadre de l'invention peut être de nature très différente selon l'utilisation du fil simple obtenu. Par exemple, lorsque le fil est destiné à renforcer une matrice organique, l'apprêt choisi pour le revêtir est de préférence compatible chimiquement avec ladite matrice. L'apprêt peut être simplement sélectionné en fonction de son aptitude à être enlevé du fil lors d'opérations de désensimage. L'apprêt peut être également choisi pour sa résistance chimique à l'égard d'un milieu dans lequel le fil est incorporé, par exemple une matrice à base de ciment.

Outre les constituants principaux, la composition de l'apprêt peut contenir des pigments, des plastifiants, des émulsifiants, des agents de mouillage, des agents de pontage, etc...

Ainsi l'apprêt déposé peut avoir une composition thermoplastique, par exemple une composition non aqueuse à base de cires microcristallines ou amorphes, naturelles ou synthétiques. A cette composition de base peuvent être ajoutés divers composés du type polyéthylène, polyacrylate, polyamide, polyvinyl acétate, etc... Des compositions de ce type sont décrites notamment dans les brevets US-A-2 723 215, US-A-4 567 102, US-A-4 581 392.

L'apprêt déposé peut avoir une composition thermodurcissable (il faut entendre par là tout mélange qui durcit sous la seule action d'une élévation de température). Ainsi l'apprêt peut avoir, par exemple, une composition thermodurcissable aqueuse à base d'émulsions d'une ou plusieurs résines polyesters comportant des insaturations et d'émulsions de peroxydes organiques, comme par exemple le $\alpha$-$\alpha'$ bistertiobutyl peroxy diisopropyl benzène.

L'apprêt déposé peut également avoir une composition telle que son durcissement est obtenu à la suite d'une réaction photochimique : il s'agit d'un apprêt photodurcissable. Sa composition contient au moins un constituant réagissant sous l'action d'un rayonnement actinique.

Par rayonnement actinique, il faut entendre toutes les radiations susceptibles de produire des réactions chimiques comme, par exemple, l'ultra-violet, la radiation émise par un laser ou un faisceau d'électrons.

Un type de composition d'apprêt photodurcissable, utilisable dans le cadre de l'invention, comprend notamment au moins un oligomère monoinsaturé ou polyinsaturé, au moins un photoamorceur et, éventuellement, au moins un solvant organique et/ou au moins un monomère mono ou polyinsaturé.

Les oligomères sont, par exemple, des polyesters acrylates, des amidons et cellulose modifiés, des époxy acrylates, des composés siliconés ou des uréthannes acrylates. Les photoamorceurs sont choisis de préférence parmi les composés suivants : la benzoïne, l'acétophénone, la benzophénone, la sulfonylacétophénone et leurs dérivés respectifs ainsi que les thioxanthones.

Des exemples de compositions d'apprêt de ce type sont décrites, en particulier, dans la demande de brevet déposée en France sous le numéro 86 05938.

Un autre type de composition d'apprêt photodurcissable, également utilisable dans le cadre de l'invention, peut comprendre au moins un monomère monoinsaturé ou polyinsaturé, au moins un photoamorceur et, éventuellement, au moins un solvant organique. Les monomères utilisés sont, de préférence, des monomères acryliques tels que l'hexane diol diacrylate ou le triméthylol propane triacrylate. Les photoamorceurs sont choisis, de préférence, parmi ceux déjà mentionnés dans la composition des apprêts comprenant au moins un oligomère.

Le même type de composition que celle précédemment décrite, mais exempte de photoamorceurs, peut constituer un revêtement dont le durcissement peut être obtenu à l'aide d'un faisceau d'électrons.

Le durcissement de l'apprêt sur le fil simple avant son bobinage présente l'avantage de maintenir parfaitement sa torsion et donc de lui conférer une excellente intégrité.

De même que la nature de l'apprêt, la quantité déposée sur le fil est choisie en fonction de l'aplication envisagée ; elle peut varier entre quelques pourcents et quatre vingts à quatre vingt dix pourcents du poids du fil revêtu d'apprêt. Cette quantité est contrôlée par différents facteurs, notamment la viscosité de l'apprêt, le type de dispositif utilisé pour le déposer ou la vitesse d'étirage du fil. Mais elle peut être également contrôlée par la torsion donnée au fil. C'est en particulier le cas lorsque les fibres se présentent sous forme d'au moins une nappe qui passe dans l'épaisseur d'un film d'apprêt recouvrant un rouleau en rotation. Il est en effet possible, dans certaines conditions, de faire remonter la contrainte de torsion au niveau des fibres, en amont de la zone où elles sont revêtues d'apprêt. Sous l'effet de cette contrainte de torsion, la nappe de fibres est légèrement gauchie, ce qui a pour conséquence de modifier la position des fibres par rapport à la surface du rouleau délivrant l'apprêt. De ce fait, la zone de contact entre le film d'apprêt et un grand nombre de fibres se trouve réduite. Il peut même arriver qu'un certain nombre de fibres soient exemptes d'apprêt. Toutes conditions égales par ailleurs, c'est un moyen de réduire la quantité d'apprêt déposée.

Lorsque l'apprêt a une composition thermoplastique il est chauffé pour être déposé à l'état fondu sur les fibres. Son durcissement intervient du simple fait de son refroidissement.

Le contact de l'apprêt avec l'atmosphère ambiante, aussitôt après son dépôt sur les fibres, est parfois

EP 0 273 812 B1

suffisant pour obtenir le durcissement désiré avant le bobinage du fil simple, en particulier lorsque la quantité d'apprêt déposée est faible.

Lorsque la quantité d'apprêt déposée sur le fil est importante, par exemple supérieure à trente pourcents, il est alors généralement nécessaire d'augmenter la vitesse de refroidissement de l'apprêt. Ceci peut être facilement obtenu en soumettant le fil à l'action d'un fluide de refroidissement tel que de l'air ou de l'eau pulvérisée.

Lorsque l'apprêt a une composition thermodurcissable, son durcissement est obtenu en soumettant le fil simple, sur au moins une partie de son trajet, à l'action d'au moins une source de chaleur.

Le temps nécessaire pour obtenir le durcissement désiré avant le bobinage du fil est là encore fonction de plusieurs facteurs : quantité d'apprêt déposée sur le fil, nature de la composition de l'apprêt, vitesse d'étirage, etc... Les moyens à mettre en oeuvre (nombre de sources de chaleur, longueur du trajet pendant lequel le fil est traité thermiquement) dépendent donc de ces facteurs.

L'apprêt déposé peut aussi avoir une composition photodurcissable durcissant essentiellement sous l'influence d'au moins un rayonnement actinique.

Comme pour les autres apprêts, le temps nécessaire pour obtenir le degré de durcissement requis diffère d'un cas à un autre. Les moyens à mettre en oeuvre pour le durcissement de ce type d'apprêt sont, par exemple, décrits dans la demande de brevet déposée en France sous le numéro FR-A-2 597 856.

Il est possible de combiner l'action d'un rayonnement actinique et celle de la chaleur simultanément ou successivement.

Le procédé selon l'invention sera mieux apprécié au travers de la description détaillée ci-après d'un mode particulier de réalisation de l'invention. Cette description est illustrée de plusieurs figures selon lesquelles :

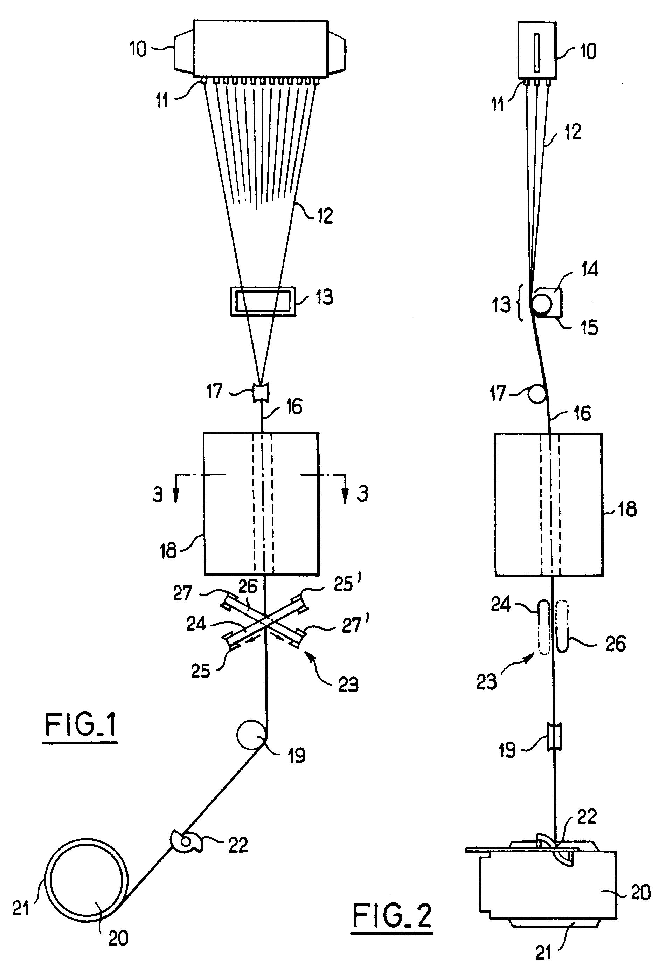

. la figure 1 est une vue frontale, schématique, d'une installation complète permettant de mettre en oeuvre l'invention,

. la figure 2 est une vue latérale, schématique, de l'installation représentée à la figure 1,

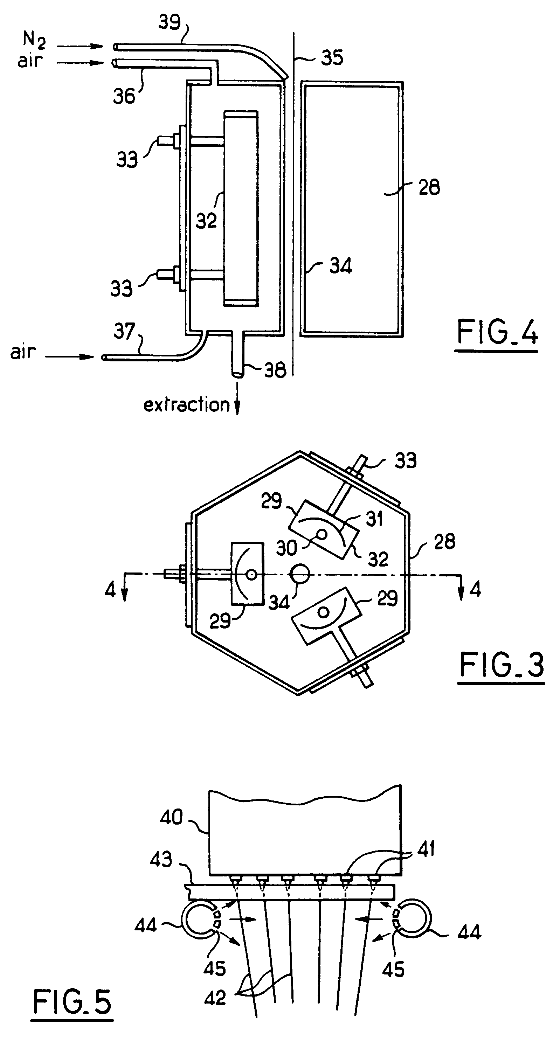

. la figure 3 est une coupe transversale, schématique, d'un dispositif permettant la polymérisation de l'apprêt déposé sur le fil,

. la figure 4 est une coupe longitudinale, schématique, du dispositif représenté figure 3,

. la figure 5 est une vue partielle, schématique, représentant en coupe la partie inférieure de la filière montrée figure 2.

D'après les figures 1 et 2, l'installation autorisant la mise en oeuvre de l'invention comprend une filière 10 généralement en alliage métallique chauffée par effet Joule. Cette filière sert à refondre le verre ou à maintenir à l'état fondu le verre provenant d'une source non représentée.

Le fond de la filière 10 est percé d'un grand nombre d'orifices, prolongés ou non par des tubes 11 très petits appelés "tétons", d'où s'écoulent des filets de verre fondu. Ces filets sont étirés mécaniquement pour donner naissance à des fibres continues 12.

Ces fibres 12, formant au moins une nappe en éventail, passent sur un dispositif 13 où elles sont enduites d'apprêt. Ce dispositif 13 peut être constitué d'un rouleau 14, dont la partie inférieure baigne dans un bain d'apprêt 15. Le rouleau 14 peut être associé à une lame calibrante non représentée de manière à former une couche d'apprêt régulière à la surface du rouleau. Un tel dispositif est décrit, par exemple, dans le brevet EP 0 002 006. Il est bien évident que l'apprêt peut être déposé sur les fibres 12 par tout autre moyen connu de l'homme du métier tel que pulvérisation, gudulette alimentée par une pompe doseuse, dispositif à mousse, qui lui apparaitra le mieux adapté en fonction de la viscosité de l'apprêt et/ou de la quantité d'apprêt désirée sur lesdites fibres.

Il est également possible de déposer séparément sur les fibres 12 un ou plusieurs constituants de l'apprêt. Ainsi, il est possible de déposer un silane à l'aide du dispositif 13, puis les autres constituants à l'aide d'un second dispositif, identique au premier, disposé au-dessous de celui-ci.

Dans le mode de réalisation choisi pour illustrer l'invention, les fibres 12 sont enduites d'un apprêt photodurcissable, dont la composition réagit sous l'action d'un rayonnement actinique.

Après enduction, les fibres 12 sont rassemblées en au moins un fil 16 par un organe tel qu'une roulette d'assemblage 17. Le fil 16 passe alors à l'intérieur du dispositif 18 où il est soumis à l'action d'un rayonnement actinique. A la sortie du dispositif 18, le fil 16 passe dans un organe de guidage, par exemple une roulette 19, avant d'être bobiné sur une broche 20 en rotation. Cette broche est mue par un moteur fixé dans un bâti non représenté. Le fil 16 est bobiné sous forme d'un enroulement 21 grâce à un organe de répartition 22 du fil 16.

Au lieu d'être étiré par une broche en rotation, le fil peut l'être par une roue d'étirage et réparti sur un convoyeur, conformément aux procédés et aux dispositifs décrits, par exemple, dans les brevets US-A-3 467 739 et US-A-3 676 095.

4

Le fil peut être également étiré par une machine de coupe comme le prévoit, par exemple, le brevet US-A-4 406 196. Dans ce dernier cas le fil simple, du fait de sa structure, ne s'écrase pas entre les roues de la machine de coupe contrairement à ce qui arrive à un fil ordinaire.

Le dispositif 23 conférant la torsion au fil 16 est implanté entre le dispositif d'irradiation 18 et l'organe de guidage 19. Il s'agit d'un dispositif bien connu dans l'industrie textile sous le nom de broche à lanières.

Ce dispositif est constitué de deux courroies sans fin 24 et 26, tendues respectivement par deux poulies 25, 25′ et 27, 27′. Le fil 16 est coincé entre ces courroies. Les poulies sont raccordées à un moteur non représenté. Lorsque le moteur est en marche, les poulies transmettent aux courroies 24 et 26 le mouvement indiqué par des flèches.

Il est possible, dans certaines conditions, de disposer les deux courroies l'une en face de l'autre, leur mouvement de déplacement étant sensiblement perpendiculaire au fil 16. Dans cette position le dispositif 23 a tendance à freiner exagérément l'étirage du fil. Ceci peut être évité en augmentant la vitesse d'étirage. Cependant si la vitesse des courroies est maintenue constante, l'augmentation de la vitesse d'étirage va se traduire par une torsion plus faible.

Pour éviter ces inconvénients il est préférable de disposer les courroies en diagonale, comme représenté figures 1 et 2. Sur la figure 2, le dispositif 23 est symbolisé par les seules courroies 24 et 26 dont les parties en avant du plan de la feuille sont en trait plein, les parties en arrière dudit plan en pointillé. Dans cette position, les mouvements des courroies indiqués par les flèches provoquent bien entendu la torsion du fil 16 mais créent également une force résultante qui contribue à l'étirage du fil 16. Cette force résultante peut être accentuée ou atténuée en modifiant en conséquence la disposition angulaire des courroies 24 et 26.

La quantité de torsion conférée au fil 16 peut être réglée en faisant varier la vitesse de rotation du dispositif 23, la vitesse d'étirage ou le rapport entre ces deux facteurs.

Dans le mode de réalisation décrit, la torsion du fil 16 doit commencer à apparaitre sur ledit fil avant son entrée dans le dispositif 18. L'observation de cette condition est impérative si l'on désire fixer la torsion grâce à la polymérisation de l'apprêt. Cette torsion peut remonter jusqu'au niveau de la roulette d'assemblage 17, voire même jusqu'au niveau des fibres 12 légèrement en amont du dispositif d'enduction 13.

Dans certaines conditions, en particulier lorsque la vitesse d'étirage du fil est faible, il est possible d'utiliser un procédé fondé sur l'application d'un fausse torsion audit fil au moyen d'un jet d'air sous forte pression. Il s'agit, par exemple, du procédé TORAY décrit dans l'article :"L'Industrie Textile - No. 1166, 5/86, 485-492". Le dispositif de mise en oeuvre de ce procédé, équipé d'une seule buse, peut être placé en aval du dispositif 18, comme indiqué précédemment, mais il peut être également placé entre la roulette d'assemblage 17 et le dispositif 18 de traitement du fil.

La structure du dispositif d'irradiation du fil est illustrée par les figures 3 et 4. Ce dispositif se compose d'une enceinte ventilée, de plusieurs sources émettrices de rayonnements ultra-violet et d'une armoire électrique de commande non représentée.

D'après la figure 3, l'enceinte est formée d'un caisson hexagonal 28 renfermant trois sources émettrices 29 disposées à 120° l'une par rapport à l'autre.

Chacune de ces sources est constituée d'un tube émetteur 30. Ce dernier peut être à haute, moyenne ou basse pression, excité au moyen d'électrodes ou de micro-ondes. Le tube émetteur est essentiellement choisi en fonction de son spectre d'émission. Il peut donc être dopé par des gaz rares ou des métaux selon le type de fabrication envisagé.

Un réflecteur semi-elliptique 31 est disposé à l'arrière du tube 30. Cet ensemble est monté sur un boitier 32 solidaire de la paroi du caisson 28 par l'intermédiaire de tiges coulissantes 33. Les tiges 33 permettent de régler la distance séparant les tubes émetteurs 30 du fil 35. Le réglage est effectué de manière à ce que les foyers des réflecteurs semi-elliptiques 31 soient confondus avec le trajet du fil 35.

Un tube de silice 34 est disposé verticalement dans l'axe du caisson 28, sur toute sa hauteur. Le fil 35, guidé par les organes 17 et 19, défile dans l'axe du tube 34. Ce tube a pour but de protéger les émetteurs 30 contre les projections éventuelles d'apprêt. Il est également possible de protéger directement les émetteurs au moyen de fenêtres en silice ; dans ce cas, le tube 34 n'est plus indispensable.

Le caisson 28 est muni de conduits 36 et 37 à ses parties supérieure et inférieure. Ces conduits permettent de souffler de l'air servant à ventiler l'intérieur du caisson ; cet air est ensuite extrait par l'intermédiaire du conduit 38. Un autre conduit 39 débouchant au sommet du tube 35, permet éventuellement de délivrer un courant de gaz inerte, par exemple de l'azote. Le fil peut être ainsi environné d'une atmosphère inerte dans toute la zone où il est soumis au rayonnement ultra-violet, ce qui permet d'accélérer la réaction de polymérisation.

L'installation illustrée par les figures 1 et 2 peut être complétée par le dispositif représenté schématiquement figure 5. Cette dernière montre en coupe verticale, transversale, la partie inférieure d'une filière 40 munie de tétons 41 d'où sont étirées les fibres 42. Le fond de la filière est équipé d'une série d'ailettes de refroidissement 43, implantées régulièrement entre les rangées de tétons. Immédiatement au-dessous des ailettes sont implantées deux tubulures 44. Ces tubulures sont disposées de part et d'autre de la filière 40 parallèlement aux grands côtés de ladite filière. La paroi des tubulures 44 est percée d'une ou plusieurs rangées d'orifices ou de fentes 45 dirigés vers la zone de fibrage.

Au cours de l'opération de fibrage, les tubulures 44 sont alimentées par un gaz sec, par exemple de l'azote. Ce gaz est soufflé par les orifices 45 en direction des fibres 42 et les environne dès leur formation. Du fait de l'appel d'air induit par le frottement des fibres 42 sur l'atmosphère environnante, l'enveloppe gazeuse formée autour d'elles les accompagne dans leur déplacement. Ce phénomène permet d'éviter ou de limiter considérablement le contact entre la surface des fibres et l'eau atmosphérique, et par là même la dégradation des propriétés mécaniques du fil. Il est ainsi possible d'obtenir un fil simple dont la résistance à la traction est particulièrement élevée, caractéristique qui est recherchée dans les applications textiles notamment.

Un certain nombre d'essais ont été réalisés avec une installation comprenant un dispositif d'irradiation du fil similaire à celui décrit précédemment. La puissance du rayonnement délivré est variable ; elle est comprise, en général, entre 50 et 200 Watts par centimètre linéaire de tube émetteur. La longueur d'onde du rayonnement émis est comprise entre 200 et 420 nanomètres.

Dans ces conditions d'essais et pour des quantités d'apprêt comprises entre 15 % et 30 % en poids du fil 16, la quantité d'apprêt polymérisé par rapport à la quantité totale d'apprêt déposé est souvent supérieure à 75 % comme l'illustrent les exemples suivants.

EXEMPLE 1

| | |
|---|---|
| Vitesse d'étirage du fil | 15 m/s |
| Composition pondérale de l'apprêt | |
| . Oligomère : epoxyacrylate (commercialisé sous la référence "Ebecryl 600" par la Société Union Chimique Belge) | 55,8 % |
| . Monomère : hexane diol diacrylate | 18,6 % |
| . Photoinitiateurs : benzyl diméthyl cétal | 10,6 % |
| . Solvant : méthyl éthyl cétone | 15,0 % |
| Quantité d'apprêt déposée sur le fil | 15,6 % |
| Quantité d'apprêt polymérisé par rapport à la quantité précédente | 100 % |

EXEMPLE 2

| | |
|---|---|
| Vitesse d'étirage du fil | 30 m/s |
| Composition pondérale de l'apprêt | |
| . Oligomère : polyester tétracrylate (Ebecryl 810) | 77,27 % |
| . Photoinitiateur : hydroxy-1-cyclohexyl-phényl cétone | 7,73 % |
| . Solvant : méthyl éthyl cétone | 15,00 % |
| . Agent mouillant : polyacrylate de diéthyle (commercialisé sous la référence "Modaflow" par la Société Monsanto) | 0,20 % |
| Quantité d'apprêt déposé sur le fil | 30 % |
| Quantité d'apprêt polymérisé par rapport à la quantité précédente | 79 % |

Lorsque la quantité d'apprêt déposé est seulement de quelques pourcents, la polymérisation de l'apprêt est généralement totale, même pour des vitesses d'étirage nettement supérieures à 30 mètres par seconde.

Dans le cas des apprêts polymérisables par la seule action de la chaleur, le chauffage du fil peut être obtenu par tout moyen connu, par exemple à l'aide de micro-ondes ou de rayonnement infrarouge. Des réflecteurs sont avantageusement disposés à l'arrière de ces sources de rayonnement afin de concentrer ledit rayonnement sur le fil. Comme pour les apprêts polymérisant sous l'action d'un rayonnement actinique, la torsion doit commencer à apparaitre avant que le fil soit traité thermiquement.

Dans le cas des apprêts thermoplastiques durcissant sous le seul effet de leur refroidissement, il est possible d'accélérer ce dernier en soumettant à l'action d'un fluide liquide ou gazeux.

Ce refroidissement peut être obtenu en implantant une ou plusieurs buses dirigées vers le fil, en amont du dispositif lui conférant sa torsion. Par ces buses il est possible de souffler, par exemple, de l'air refroidi et/ou de pulvériser de l'eau.

Un moyen particulièrement efficace consiste à faire passer le fil simple dans un tube, tel que le tube 34. Ce tube peut être d'une seule pièce, comme le tube de silice 34, ou susceptible de s'ouvrir selon une génératrice ce qui facilite la mise en place du fil au moment de la relance de la filière. Une ou plusieurs buses peuvent être installées à l'ouverture supérieure du tube, à l'instar du conduit 39 représenté à la figure 3. Par ce moyen, le temps de contact entre le fil et le fluide de refroidissement s'en trouve sensiblement augmenté, ce qui accroit la vitesse de refroidissement.

Il peut arriver qu'après la traversée du dispositif 18 permettant le durcissement de l'apprêt, celui-ci soit incomplètement durci. C'est par exemple le cas lorsque la quantité d'apprêt déposé sur le fil 16 est importante et/ou lorsque la vitesse d'étirage est élevée. Il est possible de compléter le durcissement de l'apprêt en implantant un second dispositif 18 entre l'organe de guidage 19 et l'organe d'étirage mécanique 20. Dans ce cas, il est préférable que le trajet du fil 16 soit sensiblement horizontal entre les organes 19 et 20. Avec cette implantation, il est en effet facile de faire passer plusieurs fils 16, émanant de plusieurs installations semblables à celle représentée figures 1 et 2, dans le même dispositif pour achever le durcissement de l'apprêt qui les recouvre.

En utilisant l'un ou l'autre des moyens ci-dessus, ou en combinant plusieurs d'entre eux, le procédé selon l'invention et les dispositifs de mise en oeuvre dudit procédé permettent d'obtenir, à volonté, des fils simples susceptibles de convenir pour des applications aussi diverses que les applications purement textiles, le renforcement de matrices organiques ou de matrices à base de ciment.

## Revendications

1. Procédé de fabrication d'un fil continu (16, 35) formé par le rassemblement d'une multiplicité de fibres de verre (12, 42) étirées mécaniquement à partir de filets de verre fondu s'écoulant d'une multiplicité d'orifices (11, 41) disposés à la base d'une filière (10, 40) fixe, lesdites fibres étant revêtues, au moins partiellement, d'un apprêt thermoplastique, thermodurcissable ou photodurcissable se présentant à l'état fondu ou sous forme de solution, d'émulsion ou de suspension dans des solvants appropriés, puis rassemblées en au moins un fil, caractérisé en ce qu'en cours d'étirage, on imprime un mouvement de rotation continue au fil (16, 35) et on provoque le durcissement partiel ou total de l'apprêt sur le fil simple ainsi obtenu.

2. Procédé selon la revendication 1, caractérisé en ce que les fibres de verre sont entourées d'un flux gazeux anhydre, depuis leur formation jusqu'au moment où elles sont revêtues d'apprêt.

3. Procédé selon l'une des revendications 1 et 2, caractérisé en ce qu'on dépose sur les fibres (12, 42) un apprêt à l'état fondu de composition thermoplastique non aqueuse et qu'on obtient le durcissement dudit apprêt par simple refroidissement.

4. Procédé selon la revendication 3, caractérisé en ce qu'on accélère le refroidissement de l'apprêt et donc son durcissement en soumettant le fil (16, 35) à l'action d'un fluide gazeux tel que l'air et/ou à l'action d'un fluide liquide tel que l'eau.

5. Procédé selon l'une des revendications 1 et 2, caractérisé en ce qu'on dépose sur les fibres (12, 42) un apprêt de composition thermodurcissable puis qu'on traite thermiquement le fil (16, 35) sur au moins une partie de son trajet.

6. Procédé selon l'une des revendications 1 et 2, caractérisé en ce qu'on dépose sur les fibres (12, 42) un apprêt de composition photodurcissable puis qu'on soumet le fil (16, 35) à l'action d'au moins un rayonnement actinique sur au moins une partie de son trajet.

7. Procédé selon la revendication 6, caractérisé en ce que la composition de l'apprêt comprend au moins un oligomère monoinsaturé ou polyinsaturé, au moins un photoamorceur et, éventuellement, au moins un solvant organique et/ou au moins un monomère monoinsaturé ou polyinsaturé.

**8.** Procédé selon la revendication 6, caractérisé en ce que la composition de l'apprêt comprend au moins un monomère monoinsaturé ou polyinsaturé, au moins un photoamorceur et, éventuellement, au moins un solvant organique.

**9.** Dispositif pour la fabrication d'un fil continu (16, 35) formé par le rassemblement d'une multiplicité de fibres de verre (12, 42) comprenant notamment une source d'alimentation en verre par simple gravité reliée à une filière fixe (10, 40), chauffée par effet Joule, dont la face inférieure est munie d'une multiplicité d'orifices (11, 41), un dispositif d'enduction (13), des organes d'assemblage (17), de guidage (19) et de répartition (22) du fil ainsi que des organes d'étirage mécanique (20) des fibres (12, 42), caractérisé en ce qu'il comprend en outre un dispositif de torsion (23) implanté entre le (ou les) organe (s) d'assemblage (17) des fibres et le (ou les) organe (s) de guidage (19).

**10.** Dispositif selon la revendication 9, caractérisé en ce que le dispositif de torsion (23) est un dispositif à friction tel qu'une broche à lanières.

**11.** Dispositif selon l'une des revendications 9 et 10, caractérisé en ce qu'une ou plusieurs buses, délivrant un fluide de refroidissement gazeux ou liquide, sont implantées entre l'organe d'assemblage (17) des fibres et le dispositif de torsion (23), lesdites buses étant dirigées vers le fil (16, 35).

**12.** Dispositif selon la revendication 11, caractérisé en ce qu'un tube est disposé entre l'organe d'assemblage (17) des fibres et le dispositif de torsion (23) d'une manière telle que le fil (16, 35) se déplace à l'intérieur dudit tube, et qu'au moins une buse, délivrant un fluide de refroidissement, est dirigé vers l'ouverture supérieure dudit tube.

**13.** Dispositif selon l'une des revendications 9 et 10, caractérisé en ce qu'au moins un dispositif (18) muni d'au moins une source d'émission (30) d'un rayonnement actinique est disposé entre l'organe d'assemblage (17) des fibres et le dispositif de torsion (23) d'une manière telle que le fil (16, 35) est soumis à l'action dudit rayonnement pendant son parcours à l'intérieur du dispositif (18).

**14.** Dispositif selon l'une des revendications 9 et 10, caractérisé en ce qu'au moins un dispositif muni d'au moins une source de chaleur est disposé entre l'organe d'assemblage (17) des fibres et le dispositif de torsion (23) d'une manière telle que le fil (16, 35) est soumis à l'action d'un rayonnement thermique pendant son parcours à l'intérieur dudit dispositif.

**15.** Dispositif selon la revendication 9, caractérisé en ce que le dispositif de torsion (23) est un dispositif utilisant l'action d'un flux gazeux tel qu'un jet d'air tourbillonnant.

**16.** Dispositif selon la revendication 15, caractérisé en ce que le dispositif de torsion (23) est implanté en amont du (ou des) dispositif (s) utilisé (s) pour durcir l'apprêt, par voie photochimique ou sous l'effet d'une variation de la température dudit apprêt.

**17.** Dispositif selon l'une des revendications 11 à 14 et 16, caractérisé en ce qu'au moins un dispositif, servant à durcir l'apprêt par voie photochimique ou sous l'effet d'une variation de la température dudit apprêt, est implanté entre l'organe de guidage (19) et l'organe d'étirage mécanique (20).

**18.** Fil simple obtenu par le procédé de fabrication défini par l'une quelconque des revendications 1 à 8, caractérisé en ce qu'il consiste en un fil avec torsion composé d'une multiplicité de fibres de verre et revêtu d'une couche d'apprêt au moins partiellement durci qui fixe la torsion donnée audit fil.

**Claims**

**1.** Manufacturing process for a continuous thread (16, 35) formed by joining a large number of glass fibres (12, 42) mechanically drawn from thin streams of molten glass, flowing from a large number of orifices (11, 41) disposed at the base of a stationary die (10, 40), the said fibres being at least partially coated with a thermoplastic, thermosettable or light-settable finish in the molten state or in the form of a solution, emulsion or suspension in suitable solvents, then joined to form at least one thread, characterised in that during the drawing process, a continuous rotational movement is imparted to the thread (16,35) and the finish of the simple thread thus obtained is caused to harden either partially or completely.

2. Process according to claim 1, characterised in that the glass fibres are surrounded by an anhydrous gaseous flow from their formation until the moment at which they are coated with the finish.

3. Process according to one of claims 1 and 2, characterised in that a thermoplastic finish of a non-aqueous composition is deposited, in the molten state, on the fibres (12,42) and in that the hardening of the said finish is obtained by simple cooling.

4. Process according to claim 3, characterised in that the cooling of the finish, and thus the hardening thereof, is accelerated by subjecting the thread (16,35) to the action of a gaseous fluid such as air and/or to the action of a liquid fluid such as water.

5. Process according to one of claims 1 and 2, characterised in that a finish of a thermosettable composition is deposited on the fibres (12, 42), the thread (16, 35) then being heat-treated on at least part of its path.

6. Process according to one of claims 1 and 2, characterised in that a finish of a light-settable composition is deposited on the fibres (12,42), the thread (16, 35) then being subjected to the action of at least one actinic radiation on at least part of its path.

7. Process according to claim 6, characterised in that the composition of the finish comprises at least one monounsaturated or polyunsaturated oligomer, at least one photo-initiating agent and, possibly, at least one organic solvent and/or at least one monounsaturated or polyunsaturated monomer.

8. Process according to claim 6, characterised in that the composition of the coating comprises at least one monounsaturated or polyunsaturated monomer, at least one photo-initiating agent and, possibly, at least one organic solvent.

9. Device for the manufacture of a continuous thread (16,35) formed by joining a large number of glass fibres (12,42) comprising in particular a source for supplying glass by means of simple gravity, connected to a stationary die (10,40), heated by the Joule effect, of which the lower surface is provided with a large number of orifices (11,41), a coating device (13), devices for joining (17), guiding (19) and distributing (22) the thread as well as mechanical drawing devices (20) for the fibres (12,42), characterised in that it further comprises a twisting device (23), placed between the fibre assembly device(s) (17) and the guiding device(s) (19).

10. Device according to claim 9, characterised in that the twisting device (23) is a friction device such as a strap spindle.

11. Device according to one of claims 9 and 10, characterised in that one or more nozzles, delivering a gaseous or liquid coolant fluid, are placed between the joining device (17) of the fibres and the twisting device (23), the said nozzles being directed towards the thread (16,35).

12. Device according to claim 11, characterised in that a tube is disposed between the joining device (17) of the fibres and the twisting device (23) in such a manner that the thread (16,35) is moved inside the said tube, and at least one nozzle, delivering a coolant fluid, is directed towards the upper aperture of the said tube.

13. Device according to one of claims 9 and 10, characterised in that at least one device (18), provided with a least one actinic radiation emission source (30), is disposed between the joining device (17) of the fibres and the twisting device (23) in a manner such that the thread (16, 35) is subjected to the action of the said radiation as it passes inside the device (18).

14. Device according to one of claims 9 and 10, characterised in that at least one device, provided with at least one heat source is disposed between the assembly device (17) of the fibres and the twisting device (23) in a manner such that the thread (16,35) is subjected to the action of thermal radiation during its passage through the interior of the device.

**15.** Device according to claim 9, characterised in that the twisting device (23) is a device using the action of gaseous flow such as a jet of turbulent air.

**16.** Device according to claim 15, characterised in that the twisting device (23) is placed downstream of the device(s) used for hardening the finish by means of the photochemical method or under the effect of a variation in the temperature of the said finish.

**17.** Device according to one of claims 11 to 14 and 16, characterised in that at least one device, serving to harden the finish by means of the photochemical method or under the effect of a variation in temperature of the said finish, is placed between the guiding device (19) and the mechanical drawing device (20).

**18.** Simple thread obtained by the fabrication process defined by any one of claims 1 to 8, characterised in that it consists of a twisted thread comprised of a large number of glass fibres and coated with a layer of at least partially hardened finish which secures the twisting imparted to the said thread.

**Patentansprüche**

**1.** Verfahren zur Herstellung eines Endlosfadens (16,35) durch Zusammenfügen einer Anzahl von Glasfasern (12,42), die mechanisch aus dünnen Strählen geschmolzenen Glases gezogen werden, die aus einer Anzahl von Öffnungen (11,41) im Boden einer feststehenden Ziehdüse (10,40) strömen, wobei die Fasern zumindest teilweise mit einer thermoplastischen, warmaushärtenden oder photoaushärtenden, in geschmolzenem Zustand oder als Lösung, Emulsion oder Suspension in geeigneten Lösungsmitteln vorliegenden Appretur überzogen und anschließend zu mindestens einem Faden zusammengefügt werden, **dadurch gekennzeichnet, daß** während des Ziehens dem Faden (16,35) eine kontinuierliche Drehbewegung aufgeprägt und das teilweise oder vollständige Aushärten der Appretur auf dem so erhaltenen Einfachfaden durchgeführt wird.

**2.** Verfahren nach Anspruch 1, **dadurch gekennzeichnet, daß** die Glasfasern von ihrer Bildung bis zum Überzug mit der Appretur von einem wasserfreien Gasstrom umgeben sind.

**3.** Verfahren nach einem der Ansprüche 1 und 2, **dadurch gekennzeichnet, daß** auf die Fasern (12,42) eine Appretur aus thermoplastischem, nicht wasserhaltigem Material im geschmolzenen Zustand aufgebracht wird und daß das Aushärten der Appretur durch einfaches Abkühlen erfolgt.

**4.** Verfahren nach Anspruch 3, **dadurch gekennzeichnet, daß** das Abkühlen der Appretur und damit ihr Aushärten beschleunigt wird, indem man den Faden (16,35) der Einwirkung eines gasförmigen Fluids, wie z.B. Luft, und/oder der Einwirkung eines flüssigen Fluids, wie z.B. Wasser, aussetzt.

**5.** Verfahren nach einem der Ansprüche 1 und 2, **dadurch gekennzeichnet, daß** auf die Fasern (12,42) eine Appretur mit warmaushärtender Zusammensetzung aufgebracht und danach der Faden (16,35) zumindest auf einem Teil seines Weges wärmebehandelt wird.

**6.** Verfahren nach einem der Ansprüche 1 und 2, **dadurch gekennzeichnet, daß** auf die Fasern (12,42) eine Appretur mit photoaushärtbarer Zusammensetzung aufgebracht und danach der Faden (16,35) der Einwirkung von mindestens einer aktinischen Strahlung auf mindestens einem Teil seines Weges ausgesetzt wird.

**7.** Verfahren nach Anspruch 6, **dadurch gekennzeichnet, daß** die Zusammensetzung der Appretur mindestens ein einfach oder mehrfach ungesättigtes Oligomer, mindestens einen Photoinitiator und eventuell mindestens ein organisches Lösungsmittel und/oder mindestens ein einfach oder mehrfach ungesättigtes Monomer enthält.

**8.** Verfahren nach Anspruch 6, **dadurch gekennzeichnet, daß** die Zusammensetzung der Appretur mindestens ein einfach oder mehrfach ungesättigtes Monomer, mindestens einen Photoinitiator und eventuell mindestens ein organisches Lösungsmittel enthält.

**9.** Vorrichtung zur Herstellung eines Endlosfadens (16,35) durch Zusammenfügen einer Anzahl von Glasfasern (12,42), mit insbesondere
- einer Quelle zur schwerkraftbedingten Zuführung von Glas, die mit einer durch Widerstandserwärmung erwärmten feststehenden Ziehdüse (10,40) verbunden ist, deren Boden mit einer Anzahl von Öffnungen (11,41) versehen ist,
- einer Beschichtungsvorrichtung (13),
- Einrichtungen zum Fachen (17), Führen (19) und Verteilen (22) des Fadens, sowie
- einer Einrichtung zum mechanischen Ziehen (20) der Fasern (12,42),
**dadurch gekennzeichnet, daß** die Vorrichtung ferner eine zwischen der/den Einrichtung(en) zum Fachen (17) der Fasern und der/den Einrichtung(en) zum Führen (19) angebrachte Vorrichtung zum Drehen (23) enthält.

10. Vorrichtung nach Anspruch 9, **dadurch gekennzeichnet, daß** die Vorrichtung zum Drehen (23) eine Friktionsvorrichtung wie z.B. ein Riemchendrallgeber ist.

11. Vorrichtung nach einem der Ansprüche 9 und 10, **dadurch gekennzeichnet, daß** eine oder mehrere ein gashaltiges oder flüssiges Kühlmittel abgebende Düsen zwischen der Einrichtung zum Fachen (17) der Fasern und der Vorrichtung zum Drehen (23) angebracht sind, wobei die Düsen zum Faden (16,35) gerichtet sind.

12. Vorrichtung nach Anspruch 11, **dadurch gekennzeichnet,** daß eine Hülse zwischen der Einrichtung zum Fachen (17) der Fasern und der Vorrichtung zum Drehen (23) so angebracht ist, dap der Faden (16,35) sich im Inneren der Hülse bewegt und dap mindestens eine ein Kühlmittel abgebende Düse zur oberen Öffnung der Hülse gerichtet ist.

13. Vorrichtung nach einem der Ansprüche 9 und 10, **dadurch gekennzeichnet, daß** mindestens eine Vorrichtung (18), versehen mit mindestens einer Emissionsquelle (30) einer aktinischen Strahlung, zwischen der Einrichtung zum Fachen (17) der Fasern und der Vorrichtung zum Drehen (23) so angeordnet ist, daß der Faden (16,35) während seines Wegs im Inneren der Vorrichtung (18) der Einwirkung der Strahlung ausgesetzt ist.

14. Vorrichtung nach einem der Ansprüche 9 und 10, **dadurch gekennzeichnet, daß** mindestens eine Vorrichtung, versehen mit mindestens einer Wärmequelle, zwischen der Einrichtung zum Fachen (17) der Fasern und der Vorrichtung zum Drehen (23) so angeordnet ist, daß der Faden (16,35) während seines Wegs im Inneren der Vorrichtung der Einwirkung einer Wärmestrahlung ausgesetzt ist.

15. Vorrichtung nach Anspruch 9, **dadurch gekennzeichnet, daß** die Vorrichtung zum Drehen (23) von einer Vorrichtung gebildet ist, die die Wirkung eines Schutzgases wie z.B. eines wirbelnden Luftstrahls nutzt.

16. Vorrichtung nach Anspruch 15, **dadurch gekennzeichnet, daß** die Vorrichtung zum Drehen (23) vor der/den Vorrichtung(en) angebracht ist, die zum Härten der Appretur auf photochemischem Weg oder unter Einwirkung einer Temperaturschwankung der Appretur dient/dienen.

17. Vorrichtung nach einem der Ansprüche 11 bis 14 und 16, **dadurch gekennzeichnet, daß** mindestens eine Vorrichtung zum Härten der Appretur auf photochemischem Weg oder unter Einwirkung einer Temperaturschwankung der Appretur zwischen der Führungseinrichtung (19) und der Einrichtung zum mechanischen Ziehen (20) angebracht ist.

18. Durch das durch einen der Ansprüche 1 bis 8 gekennzeichnete Herstellungsverfahren erhaltener Einfachfaden, **dadurch gekennzeichnet, daß** der Faden aus einem aus einer Anzahl von Glasfasern zusammengesetzten Strang mit Drehung besteht, der mit einer zumindest teilweise gehärteten Appreturschicht, die die dem Strang verliehene Drehung fixiert, überzogen ist.

FIG.1

FIG.2

FIG.4

FIG.3

FIG.5